(19) Europäisches Patentamt
European Patent Office
Office européen des brevets

(11) **EP 3 308 361 B1**

(12) **EUROPÄISCHE PATENTSCHRIFT**

(45) Veröffentlichungstag und Bekanntmachung des Hinweises auf die Patenterteilung:
**10.04.2024   Patentblatt 2024/15**

(21) Anmeldenummer: **16742156.9**

(22) Anmeldetag: **11.05.2016**

(51) Internationale Patentklassifikation (IPC):
***G06T 15/10*** (2011.01)

(52) Gemeinsame Patentklassifikation (CPC):
**G06T 15/10; G06T 2215/12**

(86) Internationale Anmeldenummer:
**PCT/DE2016/200220**

(87) Internationale Veröffentlichungsnummer:
**WO 2016/198059 (15.12.2016 Gazette 2016/50)**

(54) **VERFAHREN ZUR ERZEUGUNG EINES VIRTUELLEN BILDES EINER FAHRZEUGUMGEBUNG**

METHOD FOR GENERATING A VIRTUAL IMAGE OF VEHICLE SURROUNDINGS

PROCÉDÉ DE PRODUCTION D'UNE IMAGE VIRTUELLE D'UN ENVIRONNEMENT DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.06.2015   DE 102015210738**

(43) Veröffentlichungstag der Anmeldung:
**18.04.2018   Patentblatt 2018/16**

(73) Patentinhaber: **Continental Autonomous Mobility Germany GmbH**
**85057 Ingolstadt (DE)**

(72) Erfinder:
  • **FRIEBE, Markus**
    **95482 Gefrees (DE)**
  • **GARCIA MARQUES, Rodrigo**
    **96050 Bamberg (DE)**

(74) Vertreter: **Continental Corporation**
**c/o Continental Automotive GmbH**
**Intellectual Property**
**Nordostpark 30**
**90411 Nürnberg (DE)**

(56) Entgegenhaltungen:
DE-A1-102008 036 009    DE-A1-102012 203 523
DE-A1-102013 220 005    DE-T5-112011 105 371
JP-A- 2009 171 537      US-A1- 2004 260 469
US-A1- 2013 155 241     US-A1- 2014 278 065

• Yi-Fu Chen: "A Bird-view Surrounding Monitor System for Parking Assistance", Master thesis - Institute of Computer Science and Information Engineering, National Central University, Chungli, Taiwan, 27. Juni 2008 (2008-06-27), Seiten 1-73, XP055040951, Gefunden im Internet: URL:http://thesis.lib.ncu.edu.tw/ETD-db/ET D-search-c/view_etd?URN=955202054 [gefunden am 2012-10-12]
• STRECKEL B ET AL: "Lens Model Selection for a Markerless AR Tracking System", MIXED AND AUGMENTED REALITY, 2005. PROCEEDINGS. FOURTH IEEE AND ACM IN TERNATIONAL SYMPOSIUM ON VIENNA, AUSTRIA 05-08 OCT. 2005, PISCATAWAY, NJ, USA,IEEE, 1730 MASSACHUSETTS AVE., NW WASHINGTON, DC 20036-1992 USA, 5. Oktober 2005 (2005-10-05), Seiten 130-133, XP010856770, ISBN: 978-0-7695-2459-7

**Beschreibung**

Die Erfindung betrifft ein Verfahren zur Erzeugung eines virtuellen Bildes einer Fahrzeugumgebung unter Verwendung eines dreidimensionalen Umgebungsmodells, insbesondere zum Einsatz in einem Fahrzeug, welches über ein Kamera-Surround-View-System verfügt.

Fahrzeuge werden zunehmend mit Fahrerassistenzsystemen ausgerüstet, welche den Fahrer bei der Durchführung von Fahrmanövern unterstützen. Diese Fahrerassistenzsysteme enthalten zum Teil Kamera-Surround-View-Systeme, die es erlauben, dem Fahrer des Fahrzeugs die Fahrzeugumgebung anzuzeigen. Derartige Kamera-Surround-View-Systeme umfassen eine oder mehrere Fahrzeugkameras, welche reale Bilder der Fahrzeugumgebung liefern, die durch eine Datenverarbeitungseinheit des Kamera-Surround-View-Systems zu einem Umgebungsbild der Fahrzeugumgebung zusammengefügt werden. Das Bild der Fahrzeugumgebung wird dann dem Fahrer auf einer Anzeigeeinheit angezeigt. Hierzu müssen die von den Kameras des Kamera-Surround-View-Systems gewonnen realen Bilder der Fahrzeugumgebung zunächst auf Projektionspunkte eines virtuellen Umgebungsmodells der Fahrzeugumgebung projiziert werden. Anschließend kann aus der Perspektive einer virtuellen Kamera, auf das so erzeugte virtuelle Bild der Fahrzeugumgebung, wiederum das auf der Anzeigeeinheit angezeigte Bild berechnet werden. Die Position der virtuellen Kamera für die Berechnung des angezeigten Bildes kann dabei variiert werden, so dass je nach Bedarf bzw. je nach Fahrsituation dem Fahrer eine andere Darstellung der Fahrzeugumgebung angezeigt werden kann. Die Wahl des dreidimensionalen Umgebungsmodells, für die Projektion der realen Bilder sowie für die Erzeugung des virtuellen Bildes, ist dabei entscheidend für die Qualität des angezeigten Bildes.

Die Offenlegungsschrift DE 10 2012 203 523 A1 offenbart hierzu ein gattungsgemäßes Verfahren zur Bildverarbeitung von Bilddaten jeweiliger Bilder, die von mehreren Kameras erfasst werden, die an einem Fahrzeug angeordnet sind, bei dem eine Geometrie eines dreidimensionalen Umgebungsmodells bereitgestellt wird, das einen ebenen Bodenbereich aufweist, der in einer Standebene des Fahrzeugs liegt, und das eine Oberfläche aufweist, die eine Bodenoberfläche des ebenen Bodenbereichs aufweist und die einen Umgebungsraum eingrenzt, der auch das Fahrzeug umfasst. Die Bilddaten der jeweiligen Bilder der verschiedenen Kameras werden auf die Oberfläche dieses dreidimensionalen Umgebungsmodells als Umgebungsmodell-Bilddaten projiziert. Anschließend werden die zu signalisierenden Bilddaten eines zu signalisierenden Bildes aus Sicht einer virtuellen Kamera auf die Oberfläche des dreidimensionalen Umgebungsmodells ermittelt, wobei dies bei Erfüllung einer vorgegebenen Bedingung im Sinne einer spiegelbildlichen Darstellung erfolgt.

Weitere gattungsgemäße Verfahren sind aus den Offenlegungsschriften DE 10 2012 219 735 A1 und DE 10 2013 220 005 A1 bekannt.

Des Weiteren offenbart die Offenlegungsschrift US 2004/0260469 A1 ein Fahrassistenzsystem umfassend ein Abbildungsmittel zum Aufnehmen eines Umgebungsbildes eines Fahrzeugs auf einer Straßenoberfläche und ein Bildübersetzungsmittel zum Ausführen einer Bildübersetzung unter Verwendung eines dreidimensionalen Projektionsmodells, das zu einer Straßenoberflächenseite konvex ist und dessen Höhe von der Straßenoberfläche nicht innerhalb eines vorbestimmten Bereichs von einem oberen Endabschnitt des Fahrzeugs in Fahrtrichtung geändert wird. Das dreidimensionale Projektionsmodell wird durch ein zur Straßenoberflächenseite konvexes zylindrisches Oberflächenmodell und ein sphärisches Oberflächenmodell konfiguriert, das mit einem Endabschnitt des zylindrischen Oberflächenmodells verbunden ist.

Ferner offenbart die Offenlegungsschrift US 2013/0155241 A1 eine Umgebungsüberwachungsvorrichtung für ein Arbeitsfahrzeug umfassend eine erste Bildeinheit, eine Bilderzeugungseinheit und eine Anzeigeeinheit. Die erste Bildeinheit ist an dem Arbeitsfahrzeug angebracht und ausgebildet, um ein Bild eines ersten Bereichs in einer Umgebung des Arbeitsfahrzeugs aufzunehmen. Die Bilderzeugungseinheit ist konfiguriert, um ein Bild aus der Vogelperspektive der Umgebung des Arbeitsfahrzeugs zu erstellen, indem das aufgenommene Bild auf eine vorbestimmte virtuelle Projektionsebene projiziert werden. Die virtuelle Projektionsebene enthält dabei eine Form, deren Höhe von einer Bodenoberfläche mit abnehmendem Abstand zum Arbeitsfahrzeug zunimmt. Schließlich ist die Anzeigeeinheit so konfiguriert und angeordnet, dass sie das Bild aus der Vogelperspektive anzeigt.

Herkömmliche kamerabasierte Fahrerassistenzsysteme projizieren Texturinformationen des Kamerasystems somit auf eine statische Projektionsfläche, vorzugsweise auf eine dreidimensionale Schalenfläche als Umgebungsmodell, wobei der Krümmungsradius mit zunehmendem Abstand vom Fahrzeug zunimmt, wie beispielsweise in der vorangehend genannten DE 10 2013 220 005 A1 offenbart. Eine dreidimensionale Schalenfläche als Umgebungsmodell hat dabei gegenüber einer zweidimensionalen Grundfläche, d.h. einer ebenen Projektionsfläche, dabei den wesentlichen Vorteil, dass Verzerrungen von erhabenen Objekten in der Fahrzeugumgebung reduziert werden können.

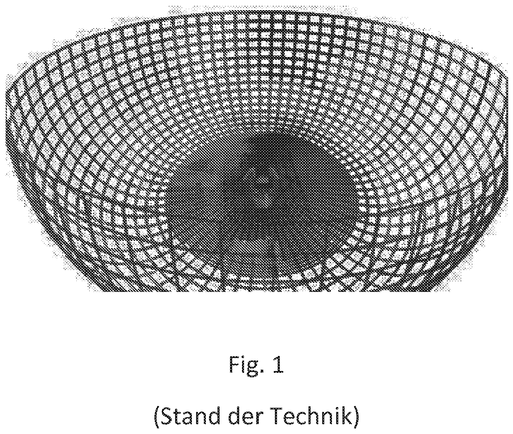

Ein wesentlicher Nachteil der bislang verwendeten dreidimensionalen schalenförmigen Umgebungsmodelle bzw. Projektionsflächen ist jedoch, dass diese Modelle in der Regel mittels Polargleichungen bzw. mittels Polarkoordinaten beschrieben werden, insbesondere für den Projektionsalgorithmus, d.h. für die Umsetzung der Projektion der realen Bilddaten. Ein solches auf Polarkoordinaten basierendes Umgebungsmodell ist exemplarisch in Fig. 1 dargestellt, wobei die Schnittpunkte des in Fig. 1 dargestellten Gittermodells den Projektionspunkten des Umgebungsmodells entsprechen. Wie man aus Fig. 1 erkennt, nimmt mit zunehmendem radialem Abstand zum Fahrzeug auch der Abstand der Projektionspunkte zueinander zu. Wesentlicher Nachteil daran ist, dass das virtuelle Bild der Fahrzeugumgebung, und somit auch das später angezeigte Bild, keine konstante Auflösung aufweist. Vielmehr vergrößert sich der Abstand der Abtastpunkte, und damit im Prinzip die Abtastpunkt-Auflösung für das Bild, mit zunehmendem Abstand zum Fahrzeug, was sich nachteilig auf das später erzeugte Bild auswirkt, z.B. in Form einer Verstärkung von Verzerrungsartefakten. Die "beste" bzw. die höchste Abtastpunkt-Auflösung, d.h. der geringste Abstand zwischen den Abtastpunkten, wird zudem in einem Bereich des virtuellen Bildes erreicht, für den überhaupt keine realen Bilddaten verfügbar sind, nämlich im Bereich unterhalb des Fahrzeugs. Für diesen Bereich werden bekanntermaßen keine Bilddaten angezeigt, sondern es wird meist ein dreidimensionales Modell des Fahrzeugs erzeugt und im angezeigten Bild dargestellt.

Es ist die Aufgabe der vorliegenden Erfindung, ein verbessertes Verfahren zur Erzeugung eines virtuellen Bildes einer Fahrzeugumgebung anzugeben, insbesondere unter Verwendung eines verbesserten dreidimensionalen Umgebungsmodells.

Diese Aufgabe wird durch die Gegenstände der unabhängigen Ansprüche gelöst. Weitere vorteilhafte Ausgestaltungen ergeben sich aus den abhängigen Ansprüchen.

Das erfindungsgemäße Verfahren dient zur Erzeugung eines virtuellen Bildes einer Fahrzeugumgebung. Dabei werden im Rahmen des Verfahrens mittels einer oder mehrerer am Fahrzeug angeordneter Kameras reale Bilder der Fahrzeugumgebung erfasst. Weiterhin werden einzelne Bildpunkte, d.h. insbesondere Bilddaten wie Farbe und Helligkeit einzelner Bildpunkte, aus den mittels der Kameras erfassten realen Bildern auf Projektionspunkte eines dreidimensionalen Umgebungsmodells der Fahrzeugumgebung projiziert. Unter dem dreidimensionalen Umgebungsmodell ist dabei insbesondere ein virtuelles Modell der Fahrzeugumgebung zu verstehen, erfindungsgemäß eine aus Projektionspunkten gebildete schalenförmige Projektionsfläche, auf die nach einem vorgegebenen Algorithmus und/oder mittels sogenannter Lookup-Tabellen die Bilddaten projiziert werden, wobei die Projektionspunkte in wenigstens drei Raumrichtungen verteilt angeordnet sind.

Erfindungsgemäß sind dabei die Projektionspunkte des dreidimensionalen Umgebungsmodells in eine erste Raumrichtung und in eine zweite Raumrichtung äquidistant angeordnet. Die Projektionspunkte sind dabei in Bezug zu zwei von drei orthogonalen Raumrichtungen des dreidimensionalen Raums, in dem das dreidimensionale Umgebungsmodell definiert ist bzw. in dem die Projektionspunkte verteilt angeordnet sind, äquidistant angeordnet, d.h. in Bezug zu wenigstens einer der Koordinatenebene des dreidimensionalen Raums. Unter der äquidistanten Anordnung ist dabei eine derartige Anordnung der Projektionspunkte zu verstehen, dass diese in wenigstens zwei Raumrichtungen, d.h. insbesondere in wenigstens zwei Koordinatenrichtungen, gleiche Abstände zueinander aufweisen. Dabei kann für beiden Raumrichtungen derselbe Abstand für die Projektionspunkte zueinander vorgesehen sein oder es können in beide Raumrichtungen unterschiedliche äquidistante Abstande für die Projektionspunkte gewählt werden. Ein wesentlicher Vorteil dieser Anordnung der Projektionspunkte bzw. des sich daraus ergebenden Umgebungsmodells besteht darin, insbesondere bei identischen Abständen in beide Raumrichtungen, dass für das virtuelle Bild eine konstante Bildauflösung in Bezug zu der durch die beiden Raumrichtungen aufgespannten Ebene erreicht wird. Die Auflösung des virtuellen Bildes ist somit, insbesondere gegenüber den bekannten Umgebungsmodellen, unabhängig vom Abstand der Projektionspunkte zum Fahrzeug.

Gemäß einer bevorzugten Ausgestaltung des erfindungsgemäßen Verfahrens ist die Position der Projektionspunkte im dreidimensionalen Raum mittels kartesischer Koordinaten definiert, d.h. vorzugweise mittels x-, y- und z-Koordinaten. Hierdurch lässt sich, insbesondere gegenüber einer Verwendung von Polarkoordinaten, auf einfache Weise eine äquidistante Anordnung der Projektionspunkte bezüglich wenigstens zweier Koordinatenrichtungen definieren, beispielsweise durch fest definierte Abstände zwischen den Projektionspunkten in x- und y-Richtung.

Erfindungsgemäß sind die Projektionspunkte in Bezug zu derjenigen Koordinatenebene äquidistant angeordnet, welche im Umgebungsmodell einer angenommenen Fahrbahnoberfläche entspricht. Unter der Fahrbahnoberfläche ist dabei die im Umgebungsmodell angenommene Lage der realen Standebene des Fahrzeugs zu verstehen. Gemäß dieser Ausgestaltung sind die Projektionspunkte somit in die beiden Raumrichtungen äquidistant angeordnet, welche im Umgebungsmodell die Ebene aufspannen, welche einer angenommenen bzw. der virtuellen Fahrbahnoberfläche entspricht.

Gemäß einer weiteren bevorzugten Ausgestaltung des erfindungsgemäßen Verfahrens ist die Größe des Abstands der Projektionspunkte in die erste und/oder die zweite Raumrichtung in Abhängigkeit wenigstens eines veränderbaren Parameters definiert. Gemäß dieser Ausgestaltung kann der Abstand der Projektionspunkte und damit die Auflösung des virtuellen Bildes auf einfache Weise, beispielsweise an eine gewünschte Bildauflösung oder beispielsweise auch an die Prozessorleistung oder Fahrzeuggeschwindigkeit, angepasst werden.

Erfindungsgemäß ist die Position der Projektionspunkte in eine dritte Raumrichtung in Abhängigkeit eines Abstands der Projektionspunkte vom Fahrzeug definiert, insbesondere in Abhängigkeit des Abstands horizontal bzw. lateral von einer im Umgebungsmodell angenommenen virtuellen Fahrzeugkante. Bei der dritten Raumrichtung handelt es sich dabei vorzugsweise um die dritte von drei orthogonalen Raumrichtungen sowie vorzugsweise um den Abstand der Projektionspunkte senkrecht zur angenommenen Fahrbahnoberfläche. Mit anderen Worten handelt es sich bei der Position in die dritte Raumrichtung um die Höhe der Projektionspunkte in Bezug zur angenommenen Fahrbahnoberfläche im virtuellen Umgebungsmodell.

Die Position der Projektionspunkte in die dritte Raumrichtung kann dabei weiterhin in Abhängigkeit eines vorgegebenen maximalen Abstandes, d.h. in Abhängigkeit eines Grenzwerts für den Abstand zum Fahrzeug bzw. zur Fahrzeugkante, und/oder in Abhängigkeit eines vorgegebenen Steigungsfaktors definiert sein.

Weiterhin kann ein Maximalwert für die Position der Projektionspunkte in die dritte Raumrichtung vorgegeben sein, insbesondere eine maximale Höhe der Projektionspunkte im virtuellen Umgebungsmodell.

Die Position bzw. die Verteilung der Projektionspunkte in die dritte Raumrichtung wird dabei im Rahmen des erfindungsgemäßen Verfahrens bevorzugt mittels einer Exponentialfunktion beschrieben.

Die Definition der Position der Projektionspunkte in die dritte Raumrichtung in Abhängigkeit eines oder mehrerer der vorangehend genannten Parameter, sowie insbesondere mittels einer Exponentialfunktion, ermöglicht dabei die Bereitstellung eines dynamischen veränderbaren Modells, das besonders einfach an den jeweiligen Anwendungsfall angepasst werden kann. Beispielsweise kann die so erzeugte erfindungsgemäße schalenförmige Projektionsfläche auf einfache Weise, d.h. durch Anpassung weniger Parameter, an die reale Welt angepasst werden. Hierzu können z.B. Abstände zu Objekten in der Fahrzeugumgebung gemessen und sowohl die maximale Ausdehnung (Grenzwert für den Abstand zum Fahrzeug) und der Steigungsfaktor der Seitenwände der Projektionsfläche an diese Objektdistanzen angepasst werden, insbesondere um Verzerrungen von Objekten im angezeigten Bild zu reduzieren.

Gemäß einer weiteren bevorzugten Ausgestaltung des erfindungsgemäßen Verfahrens ist im Umgebungsmodell wenigstens ein Bereich um das Fahrzeug bzw. um dessen virtuelle Position im Umgebungsmodell definiert, insbesondere ein erster Bereich, wobei in diesem Bereich, insbesondere für die Berechnung der Position der Projektionspunkte in die dritte Raumrichtung, der Abstand eines Projektionspunktes vom Fahrzeug dem lateralen Abstand des Projektionspunktes von der Fahrzeugkante entspricht, d.h. dessen Abstand in die erste oder zweite Raumrichtung. Bei dem ersten Bereich handelt es sich vorzugsweise um die Bereiche vor und hinter dem Fahrzeug sowie seitlich, d.h. links und rechts, neben dem Fahrzeug.

Gemäß einer weiteren bevorzugten Ausgestaltung des erfindungsgemäßen Verfahrens ist im Umgebungsmodell wenigstens ein Bereich um das Fahrzeug bzw. um dessen virtuelle Position im Umgebungsmodell definiert, insbesondere ein zweiter Bereich, wobei in diesem Bereich, insbesondere für die Berechnung der Position der Projektionspunkte in die dritte Raumrichtung, der Abstand eines Projektionspunktes von der Fahrzeugkante dem radialen Abstand des Projektionspunktes von einem bestimmten Punkt entspricht, insbesondere von einem Fahrzeugmittelpunkt oder Fahrzeugeckpunkt. Bei dem zweiten Bereich handelt es sich dabei vorzugsweise um die Bereiche vorne-links und vorne-rechts sowie hinten-links und hinten-rechts neben dem Fahrzeug.

Die Erfindung umfasst weiterhin eine Vorrichtung zur Erzeugung eines virtuellen Bildes einer Fahrzeugumgebung, umfassend eine oder mehrere Kameras, die am Fahrzeug angeordnet sind und die zur Erfassung realer Bilder aus der Fahrzeugumgebung dienen. Die Vorrichtung umfasst weiterhin Mittel zur Erzeugung des virtuellen Bildes mittels Projektion der Bildpunkte aus den mittels der Kameras erfassten realen Bildern auf ein definiertes dreidimensionales Umgebungsmodell der Fahrzeugumgebung. Erfindungsgemäß sind die Mittel dabei zur Erzeugung des virtuellen Bildes gemäß dem erfindungsgemäßen Verfahren ausgebildet, insbesondere unter Verwendung eines dreidimensionalen Umgebungsmodells gemäß einer der vorangehend beschriebenen Ausgestaltungen.

Die Erfindung betrifft weiterhin ein Fahrerassistenzsystem, welches eine erfindungsgemäße Vorrichtung umfasst oder in dem das erfindungsgemäße Verfahren verwendet wird.

Weiterhin umfasst die Erfindung ein Fahrzeug in dem ein solches Fahrerassistenzsystem oder die erfindungsgemäße Vorrichtung angeordnet sind.

Die Erfindung wird nachfolgend anhand eines Ausführungsbeispiels näher erläutert, aus dem sich weitere Vorteile und Anwendungsmöglichkeiten ergeben.

Es zeigen

Figur 1:   ein aus dem Stand der Technik bekanntes und auf Polarkoordinaten basierendes schalenförmiges Umgebungsmodell.

Figur 2:   ein Beispiel für ein im Rahmen des erfindungsgemäßen Verfahren verwendetes dreidimensionales Umgebungsmodell in einer Draufsicht.

Figur 3:   die erfindungsgemäße Anordnung der Projektionspunkte in eine dritte Raumrichtung.

Wie bereits bei den aus dem Stand der Technik bekannten Verfahren, werden im Rahmen des erfindungsgemäßen Verfahrens mittels einer oder mehrerer am Fahrzeug angeordneter Kameras reale Bilder der Fahrzeugumgebung erfasst.

Weiterhin werden im Rahmen des erfindungsgemäßen Verfahrens einzelne Bildpunkte der realen Bilder, d.h. insbesondere Bilddaten wie die Farbe und Helligkeit einzelner Bildpunkte, auf Projektionspunkte ($P_i$) eines dreidimensionalen Umgebungsmodells der Fahrzeugumgebung projiziert. Der Begriff "Projektionspunkte" kann dabei synonym zu den im Stand der Technik ebenfalls verwendeten Begriffen "Abtastpunkte" oder "Sampling Points" verstanden werden.

Der wesentliche Unterschied der vorliegenden Erfindung zu den aus dem Stand der Technik bekannten Verfahren ist die Ausgestaltung des im Rahmen des erfindungsgemäßen Verfahrens verwendeten dreidimensionalen Umgebungsmodells, insbesondere die Verteilung bzw. Anordnung der Projektionspunkte ($P_i$) im dreidimensionalen Raum (x,y,z-Raum).

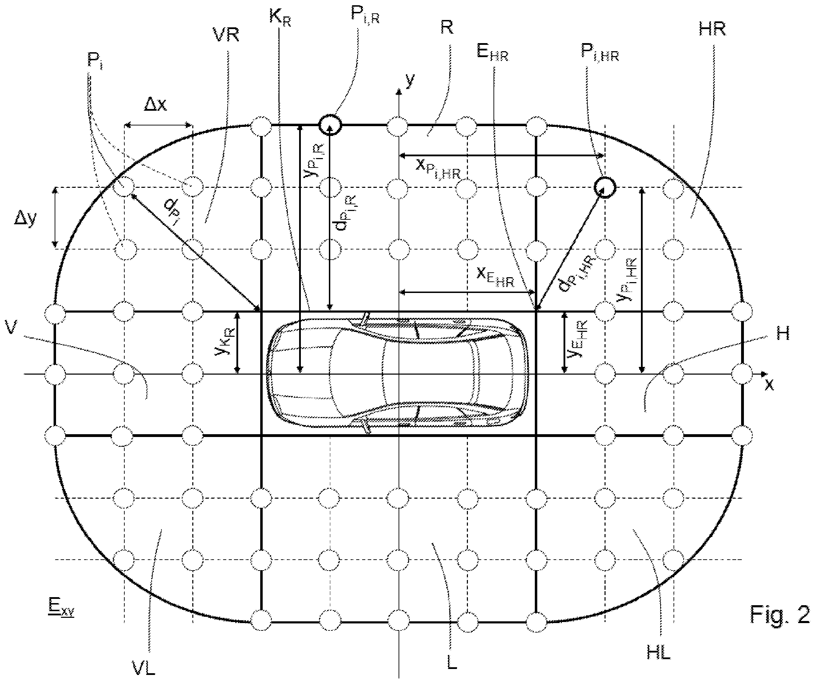

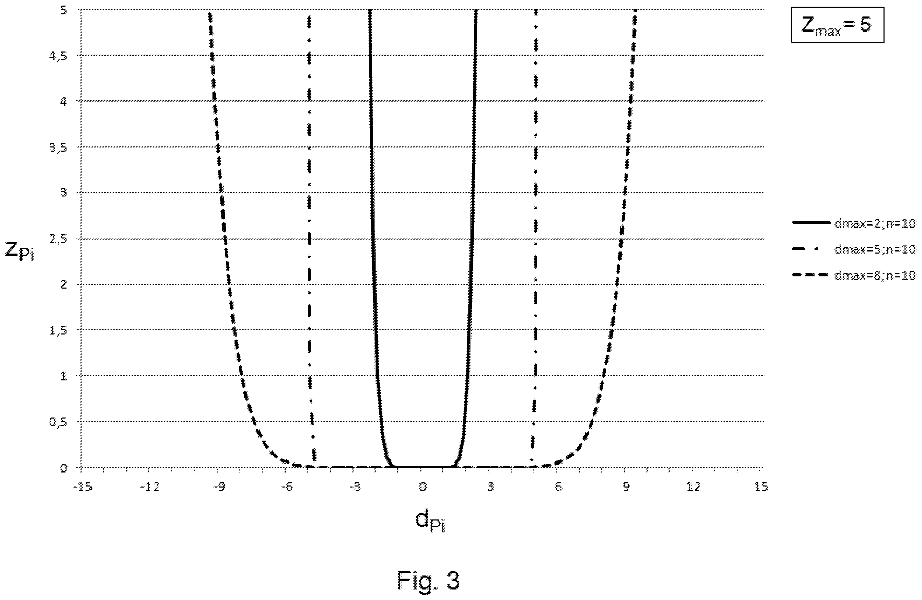

Die Figuren 2 und Figur 3 zeigen dabei eine bevorzugte Ausgestaltung eines solchen im Rahmen des erfindungsgemäßen Verfahrens verwendeten Umgebungsmodells.

Figur 2 zeigt das verwendete Umgebungsmodell in der vertikalen Draufsicht, d.h. aus der Vogelperspektive. Gemäß der vorliegenden Erfindung sind die Positionen der Projektionspunkte ($P_i$) des dreidimensionalen Umgebungsmodels mittels kartesischer Koordinaten x, y und z definiert. In Figur 2 ist somit das Umgebungsmodell aus vertikaler z-Richtung auf die x-, y-Koordinatenebene ($E_{xy}$) dargestellt, wobei diese Ebene ($E_{xy}$) im Umgebungsmodell gleichzeitig der angenommenen Fahrbahnoberfläche bzw. der Standebene des Fahrzeugs entspricht.

Die Projektionspunkte ($P_i$) sind erfindungsgemäß in wenigstens eine erste Raumrichtung (x) und eine zweite Raumrichtung (y) äquidistant zueinander angeordnet. Im vorliegenden Ausführungsbeispiel handelt es sich bei den beiden Raumrichtungen um die Koordinatenrichtungen x und y, d.h. die Projektionspunkte ($P_i$) weisen in x- und in y-Richtung konstant gleiche Abstände ($\Delta x$, $\Delta y$) zueinander auf. Die Projektionspunkte ($P_i$) sind im vorliegenden Beispiel somit in Bezug zu derjenigen Koordinatenebene ($E_{xy}$) äquidistant zueinander angeordnet, welche im Umgebungsmodell der angenommenen Fahrbahnoberfläche entspricht.

Die Größe des Abstands ($\Delta x$, $\Delta y$) der Projektionspunkte in x- und y-Richtung zueinander kann dabei erfindungsgemäß entweder fest vorgegeben oder variabel definiert sein, insbesondere in Abhängigkeit eines oder mehrerer Parameter, beispielsweise in Abhängigkeit der gewünschten Auflösung des virtuellen bzw. des angezeigten Bildes, in Abhängigkeit der Prozessorleistung der Bildverarbeitungseinheit und/oder beispielsweise in Abhängigkeit der aktuellen Fahrgeschwindigkeit.

Die Position der Projektionspunkte ($P_i$) in die dritte Raumrichtung (z), welche erfindungsgemäß der z-Richtung und damit der Höhe der Projektionspunkte ($P_i$) über der angenommenen Fahrbahnoberfläche entspricht, nimmt im vorliegenden Ausführungsbeispiel mit zunehmenden Abstand ($d_{Pi}$) zum Fahrzeug zu, so dass das Umgebungsmodell, wie in Fig. 3 gezeigt, eine schalenförmige Projektionsfläche bildet. Die Position in Z-Richtung ist dabei erfindungsgemäß in Abhängigkeit des Abstands ($d_{Pi}$) der Projektionspunkte ($P_i$) zum Fahrzeug sowie in Abhängigkeit weiterer Parameter definiert.

Figur 3 zeigt in diesem Zusammenhang eine bevorzugte Ausgestaltung für die Festlegung der Position der Projektionspunkte ($z_{Pi}$) in z-Richtung. Die Position ($z_{Pi}$) in Z-Richtung ist dabei sowohl in Abhängigkeit des Abstands ($d_{Pi}$) zum Fahrzeug als auch in Abhängigkeit eines Grenzwertes für den Abstand zum Fahrzeug, d.h. eines vorgegebenen maximalen Abstands ($d_{max}$) der Projektionspunkte ($P_i$) zum Fahrzeug, sowie in Abhängigkeit eines vorgegebenen Steigungsparameters (n) definiert. Weiterhin ist im dargestellten Beispiel ein Maximalwert bzw. ein Grenzwert ($z_{max}$) für die Höhe des Umgebungsmodells festgelegt.

Die z-Koordinate bzw. die Höhe ($z_{Pi}$) der Projektionspunkte ergibt sich somit allgemein gemäß der Formel

$$z_{Pi} = (d_{Pi}/d_{max})^n \qquad (1)$$

Dabei sind die Werte $d_{max}$, $z_{max}$ und n vorzugsweise für alle Projektionspunkte ($P_i$) identisch gewählt, wohingegen der Abstand ($d_{Pi}$) der Projektionspunkte ($P_i$) für einzelne Bereiche um das Fahrzeug bevorzugt unterschiedlich definiert ist.

Im vorliegenden Beispiel sind dazu gemäß Fig. 2 erste Bereiche festgelegt, nämlich die Bereiche vor (V) und hinter (H) dem Fahrzeug sowie die Bereiche links (L) und rechts (R) neben dem Fahrzeug, wobei in diesen Bereichen der Abstand ($d_{Pi}$) eines Projektionspunktes ($P_{i,R}$) vom Fahrzeug dem lateralen bzw. dem senkrechten Abstand ($d_{Pi,R}$) des Projektionspunktes von der nächstgelegenen virtuellen Fahrzeugkante ($K_R$) in x- oder y-Richtung entspricht. Demnach gilt in diesen Bereichen, für die Berechnung der Höhe bzw. der Z-Koordinate ($z_{Pi}$), ein Abstand ($d_{Pi}$) der Projektionspunkte ($P_i$) gemäß der folgenden Formel (hier beispielhaft angegeben für einen beliebigen Projektionspunkt ($P_{i,R}$) im Bereich (R) rechts neben dem Fahrzeug:)

$$d_{Pi,R} = y_{Pi,R} - y_{KR} \qquad (2)$$

Weiterhin sind im vorliegenden Beispiel zweite Bereiche festgelegt, nämlich die Bereich vorne-links (VL) und vorne-rechts (VR) neben dem Fahrzeug sowie die Bereiche hinten-links (HL) und hinten-rechts (HR) neben dem Fahrzeug, welche insbesondere den Überlappungsbereichen von Kameras eines Kamera-Surround-View-Systems entsprechen können, d.h. deren überlappenden Erfassungsbereichen. In diesen Bereichen entspricht der Abstand ($d_{Pi}$) eines Projektionspunktes ($P_{i,HR}$) vom Fahrzeug dem radialen Abstand ($d_{Pi,HR}$) des Projektionspunktes ($P_{i,HR}$) vom nächstgelegenen Fahrzeugeckpunkt ($E_{HR}$), d.h. vom Knotenpunkt der nächstgelegenen Fahrzeugkanten. Demnach gilt in diesen Bereichen, für die Berechnung der Höhe ($z_{Pi}$), ein Abstand ($d_{Pi}$) der Projektionspunkte ($P_i$) gemäß der folgenden Formel (hier beispielhaft angegeben für einen beliebigen Projektionspunkt ($P_{i,HR}$) im Bereich (HR) hinten-rechts neben dem Fahrzeug)

$$d_{Pi,HR} = \sqrt{(x_{Pi,HR} - x_{EHR})^2 + (y_{Pi,HR} - y_{EHR})^2} \qquad (3)$$

Das dreidimensionale Umgebungsmodell, welches im Rahmen der vorliegenden Erfindung zur Erzeugung des virtuellen Bildes der Fahrzeugumgebung verwendet wird, ist in den Figuren 2 und 3 stark vereinfacht dargestellt, insbesondere mit im Vergleich zum realen Anwendungsfall nur wenigen Projektionspunkten ($P_i$). Das Umgebungsmodell kann, beispielsweise bei Anwendung für ein Fahrerassistenzsystem in einem Fahrzeug, entweder statisch vorgegeben sein oder beispielsweise für jedes Bild in Echtzeit neu berechnet werden. Das erfindungsgemäße Verfahren kann dabei insbesondere durch ein Computerprogramm in einem Fahrerassistenzsystem implementiert sein, welches Computerbefehle enthält, die durch einen Mikroprozessor ausgeführt werden können. Dieses Programm wird bei einer möglichen Ausführungsform auf einem Datenträger oder in einem Programmspeicher gespeichert.

## Patentansprüche

1. Verfahren zur Erzeugung eines virtuellen Bildes einer Fahrzeugumgebung, wobei

   - mittels einer oder mehrerer am Fahrzeug angeordneter Kameras reale Bilder der Fahrzeugumgebung erfasst und
   - zur Erzeugung des virtuellen Bildes einzelne Bildpunkte aus den mittels der Kameras erfassten realen Bilder auf Projektionspunkte ($P_i$) eines dreidimensionalen Umgebungsmodells der Fahrzeugumgebung projiziert werden, wobei die Projektionspunkte ($P_i$) eine schalenförmige Projektionsfläche bilden,

   wobei

   - die Projektionspunkte ($P_i$) in einer ersten Raumrichtung (x) und einer zweiten Raumrichtung (y), welche orthogonal zur ersten Raumrichtung ist, äquidistant zueinander angeordnet sind, so dass für das virtuelle Bild eine konstante Bildauflösung in Bezug zu der durch die beiden Raumrichtungen (x, y) aufgespannten Koordinatenebene ($E_{xy}$), welche im Umgebungsmodell einer Fahrbahnoberfläche entspricht, erreicht wird,

   wobei die Position ($z_{Pi}$) der Projektionspunkte ($P_i$) in einer dritten Raumrichtung (z), welche der Höhe der Projektionspunkte ($P_i$) in Bezug zu der Fahrbahnoberfläche in dem Umgebungsmodell entspricht, in Abhängigkeit eines Abstands ($d_{Pi}$) vom Fahrzeug im Umgebungsmodell definiert ist.

2. Verfahren nach Anspruch 1, **dadurch gekennzeichnet, dass** die Position der Projektionspunkte ($P_i$) im dreidimensionalen Raum mittels Verwendung von kartesischer Koordinaten definiert ist.

3. Verfahren nach einem der Ansprüche 1 oder 2, **dadurch gekennzeichnet, dass** die Größe der äquidistanten Abstände ($\Delta x$; $\Delta y$) der Projektionspunkte ($P_i$) in die erste und/oder in die zweite Raumrichtung (x, y) in Abhängigkeit wenigstens eines veränderbaren Parameters definiert ist.

4. Verfahren nach einem der vorhergehenden Ansprüche , **dadurch gekennzeichnet, dass** die Position ($z_{Pi}$) der Projektionspunkte ($P_i$) in die dritte Raumrichtung (z) weiterhin in Abhängigkeit eines vorgegebenen Grenzwertes ($d_{max}$) für den Abstand ($d_{pi}$) zum Fahrzeug und/oder in Abhängigkeit eines vorgegebenen Steigungsparameters (n) definiert ist.

5. Verfahren nach einem der vorhergehenden Ansprüche, **dadurch gekennzeichnet, dass** für die Berechnung des Umgebungsmodells weiterhin ein Maximalwert ($z_{max}$) für die Position ($z_{Pi}$) der Projektionspunkte ($P_i$) in die dritte Raumrichtung (z) vorgegeben ist.

6. Verfahren nach einem der vorhergehenden Ansprüche, **dadurch gekennzeichnet, dass**

im Umgebungsmodell wenigstens ein erster Bereich (V, H, L, R) um das Fahrzeug definiert ist, wobei in diesem Bereich der Abstand ($d_{Pi}$) der Projektionspunkte ($P_i$) vom Fahrzeug dem lateralen Abstand ($d_{Pi,R}$) der Projektionspunkte ($P_{i,R}$) in diesem Bereich von einer virtuellen Fahrzeugkante ($K_R$) entspricht.

7. Verfahren nach einem der vorhergehenden Ansprüche , **dadurch gekennzeichnet, dass**
im Umgebungsmodell wenigstens ein zweiter Bereich (VL, VR, HL, HR) um das Fahrzeug definiert ist, wobei in diesem Bereich der Abstand ($d_{Pi}$) der Projektionspunkte ($P_i$) vom Fahrzeug dem radialen Abstand ($d_{Pi,HR}$) der Projektionspunkte ($d_{Pi,HR}$) in diesem Bereich von einem Fahrzeugeckpunkt ($E_{HR}$) entspricht, wobei der Fahrzeugeckpunkt ($E_{HR}$) ein Knotenpunkt der nächstgelegenen Fahrzeugkanten ist.

8. Vorrichtung zur Erzeugung eines virtuellen Bildes einer Fahrzeugumgebung, umfassend

    - eine oder mehrere am Fahrzeug angeordnete Kameras zur Erfassung realer Bilder der Fahrzeugumgebung und
    - Mittel zur Erzeugung des virtuellen Bildes mittels Projektion von Bildpunkten aus den mittels der Kameras erfassten realen Bildern auf Projektionspunkte ($P_i$) eines dreidimensionalen Umgebungsmodells der Fahrzeugumgebung, **dadurch gekennzeichnet, dass**

    die Mittel zur Erzeugung des virtuellen Bildes zur Umsetzung eines Verfahrens nach einem der vorangegangenen Ansprüche ausgebildet sind.

9. Fahrerassistenzsystem umfassend eine Vorrichtung gemäß Anspruch 8 oder ausgebildet zur Umsetzung eines Verfahrens nach einem der Ansprüche 1-7.

10. Fahrzeug umfassend eine Vorrichtung nach Anspruch 8 oder ein Fahrerassistenzsystem nach Anspruch 9.

**Claims**

1. Method for generating a virtual image of a vehicle environment, wherein

    - real images of the vehicle environment are recorded by means of one or more cameras arranged at the vehicle, and
    - individual image points from the real images which are recorded by means of the cameras are projected onto projection points ($P_i$) of a three-dimensional environment model of the vehicle environment in order to generate the virtual image, wherein the projection points ($P_i$) form a bowl-type projection surface, wherein
    - the projection points ($P_i$) are arranged equidistantly from one another in a first spatial direction (x) and a second spatial direction (y), which is orthogonal to the first spatial direction, with the result that a constant image resolution with respect to the coordinate plane ($E_{xy}$), which is defined by the two spatial directions (x, y) and corresponds to a driving surface in the environment model, is achieved for the virtual image,

    wherein the position ($z_{Pi}$) of the projection points ($P_i$) in a third spatial direction (z), which corresponds to the height of the projection points ($P_i$) with respect to the driving surface in the environment model, is defined in dependence on a distance ($d_{Pi}$) from the vehicle in the environment model.

2. Method according to Claim 1, **characterized in that** the position of the projection points (Pi) in the three-dimensional space is defined by using Cartesian coordinates.

3. Method according to either of Claims 1 or 2, **characterized in that** the magnitude of the equidistant distances ($\Delta x$; $\Delta y$) of the projection points ($P_i$) in the first and/or in the second spatial direction (x, y) is defined in dependence on at least one variable parameter.

4. Method according to any of the preceding claims, **characterized in that** the position ($z_{Pi}$) of the projection points ($P_i$) in the third spatial direction (z) is furthermore defined in dependence on a specified limit value ($d_{max}$) for the distance ($d_{pi}$) from the vehicle and/or in dependence on a specified slope parameter (n).

5. Method according to any of the preceding claims, **characterized in that** furthermore a maximum value ($z_{max}$) for the position ($z_{Pi}$) of the projection points ($P_i$) in the third spatial direction (z) is specified for the calculation of the environment model.

6. Method according to any of the preceding claims, **characterized in that** at least one first region (V, H, L, R) around the vehicle is defined in the environment model, wherein the distance ($d_{Pi}$) of the projection points ($P_i$) in this region from the vehicle corresponds to the lateral distance ($d_{Pi,R}$) of the projection points ($P_{i,R}$) in this region from a virtual vehicle edge ($K_R$).

7. Method according to any of the preceding claims, **characterized in that** at least one second region (VL, VR, HL, HR) around the vehicle is defined in the environment model, wherein the distance ($d_{Pi}$) of the projection points ($P_i$) in this region from the vehicle corresponds to the radial distance ($d_{Pi,HR}$) of the projection points ($d_{Pi,HR}$) in this region from a vehicle corner point ($E_{HR}$), the vehicle corner point ($E_{HR}$) being a node point of the nearest vehicle edges.

8. Apparatus for generating a virtual image of a vehicle environment, comprising

   - one or more cameras arranged at the vehicle for recording real images of the vehicle environment, and
   - means for generating the virtual image by means of projection of image points from the real images recorded by means of the camera onto projection points ($P_i$) of a three-dimensional environment model of the vehicle environment,

   **characterized in that**
   the means for generating the virtual image are designed for carrying out a method according to any of the preceding claims.

9. Driver assistance system comprising an apparatus according to Claim 8 or designed for carrying out a method according to any of Claims 1-7.

10. Vehicle comprising an apparatus according to Claim 8 or a driver assistance system according to Claim 9.


**Revendications**

1. Procédé de génération d'une image virtuelle de l'environnement d'un véhicule,

   - des images réelles de l'environnement du véhicule étant capturées au moyen d'une ou de plusieurs caméras disposées sur le véhicule et
   - pour générer l'image virtuelle, des pixels individuels des images réelles capturées au moyen des caméras étant projetés sur des points de projection ($P_i$) d'un modèle d'environnement tridimensionnel de l'environnement du véhicule, les points de projection ($P_i$) formant une surface de projection en forme de coque,
   - les points de projection ($P_i$) étant disposés de manière équidistante les uns des autres dans une première direction spatiale (x) et une deuxième direction spatiale (y), laquelle est orthogonale à la première direction spatiale, de sorte qu'une résolution d'image constante est obtenue pour l'image virtuelle, en référence au plan de coordonnées ($E_{xy}$) couvert par les deux directions spatiales (x, y), lequel correspond à une surface de chaussée dans le modèle d'environnement,

   la position ($z_{Pi}$) des points de projection ($P_i$) dans une troisième direction spatiale (z), laquelle correspond à la hauteur des points de projection ($P_i$) en référence à la surface de la chaussée dans le modèle d'environnement, étant définie en fonction d'un écart ($d_{Pi}$) par rapport au véhicule dans le modèle d'environnement.

2. Procédé selon la revendication 1, **caractérisé en ce que** la position des points de projection (Pi) dans l'espace tridimensionnel est définie en utilisant des coordonnées cartésiennes.

3. Procédé selon l'une des revendications 1 ou 2, **caractérisé en ce que** la grandeur des écarts équidistants ($\Delta x$ ; $\Delta y$) des points de projection ($P_i$) dans la première et/ou dans la deuxième direction spatiale (x, y) est définie en fonction d'au moins un paramètre modifiable.

4. Procédé selon l'une des revendications précédentes, **caractérisé en ce que** la position ($z_{Pi}$) des points de projection ($P_i$) dans la troisième direction spatiale (z) est en outre définie en fonction d'une valeur limite ($d_{max}$) prédéterminée pour l'écart ($d_{pi}$) par rapport au véhicule et/ou en fonction d'un paramètre de pente (n) prédéterminé.

5. Procédé selon l'une des revendications précédentes, **caractérisé en ce qu'**une valeur maximale ($z_{max}$) pour la

position ($z_{Pi}$) des points de projection ($P_i$) dans la troisième direction spatiale ($z$) est en outre prédéfinie pour le calcul du modèle d'environnement.

6. Procédé selon l'une des revendications précédentes, **caractérisé en ce que** dans le modèle d'environnement, au moins une première zone (V, H, L, R) est définie autour du véhicule, l'écart ($d_{Pi}$) des points de projection ($P_i$) par rapport au véhicule correspondant, dans cette zone, à l'écart latéral ($d_{Pi,R}$) des points de projection ($P_{i,R}$) dans cette zone par rapport à un bord virtuel de véhicule ($K_R$).

7. Procédé selon l'une des revendications précédentes, **caractérisé en ce que** dans le modèle d'environnement, au moins une deuxième zone (VL, VR, HL, HR) est définie autour du véhicule, l'écart ($d_{Pi}$) des points de projection ($P_i$) par rapport au véhicule correspondant, dans cette zone, à l'écart radial ($d_{Pi,HR}$) des points de projection ($d_{Pi,HR}$) dans cette zone par rapport à un point d'angle de véhicule ($E_{HR}$), le point d'angle de véhicule ($E_{HR}$) étant un point de jonction des bords de véhicule les plus proches.

8. Dispositif de génération d'une image virtuelle de l'environnement d'un véhicule, comprenant

   - une ou plusieurs caméras disposées sur le véhicule et destinées à capturer des images réelles de l'environnement du véhicule et
   - des moyens destinés à générer l'image virtuelle au moyen de la projection de pixels issus des images réelles capturées au moyen des caméras sur des points de projection ($P_i$) d'un modèle d'environnement tridimensionnel de l'environnement du véhicule, **caractérisé en ce que**

   les moyens destinés à générer l'image virtuelle sont configurés pour mettre en oeuvre un procédé selon l'une des revendications précédentes.

9. Système d'assistance à la conduite comprenant un dispositif selon la revendication 8 ou configuré pour mettre en oeuvre un procédé selon l'une des revendications 1 à 7.

10. Véhicule comprenant un dispositif selon la revendication 8 ou un système d'assistance à la conduite selon la revendication 9.

Fig. 1

(Stand der Technik)

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012203523 A1
- DE 102012219735 A1
- DE 102013220005 A1

- US 20040260469 A1
- US 20130155241 A1